# EUROPEAN PATENT APPLICATION

(11) **EP 3 617 881 A1**
(43) Date of publication of application: **04.03.2020**
(21) Application number: 18191367.4
(22) Date of filing: 29.08.2018
(51) Int. Cl.: G06F 9/54, H04L 29/08

(54) **SYSTEM AND METHOD FOR MONITORING AN ELECTRONIC DEVICE**

(71) Applicant: Advanced Digital Broadcast S.A., 1293 Bellevue (CH)
(72) Inventor: Jurkiewicz, Michal, 65-119 Zielona Gora (PL)
(74) Representative: Blonski, Pawel

(57) **Abstract**

A method for monitoring an electronic device using an interceptor module (103) operating as a bridge between a server (105) and a client device (101) the method further comprising the steps of: receiving (301) a request for a connection from the server (105), which is followed by establishing (302) such connection between the client device (101) and the server (105); receiving (303) from the server (105) a request for parameters from the from the server (105); obtaining (304) by the interceptor module (103) obtains the parameters requested by the server (105) and providing (305) a suitable response to the server (105); storing (306) by the interceptor module (103) the parameters requested by the server (105) in a database module (206); ending (307) said connection, based on a request received from the server (105) or the client (101).

## Description

### TECHNICAL FIELD

The present invention relates to a system and method for monitoring an electronic device. In particular the present invention relates to a monitoring agent system that operates as an intercepting module for the purpose of monitoring customer premises equipment state and/or operating parameters such as upload and/or download speed or the like.

### BACKGROUND OF THE INVENTION

Prior art defines an interceptor pattern as a software design pattern that is used when software systems or frameworks want to offer a way to change, or augment, their usual processing cycle. For example, a (simplified) typical processing sequence for a web-server is to receive a URI (Uniform Resource Identifier) from the browser, map it to a file on disk, open the file and send its contents to the browser. Any of these steps could be replaced or changed, e.g. by replacing the way URIs are mapped to filenames, or by inserting a new step which processes the files contents.

Key aspects of the pattern are that the change is transparent and used automatically. In essence, the rest of the system does not have to know something has been added or changed and can keep working as before. To facilitate this, a predefined interface for extension has to be implemented, some kind of dispatching mechanism is required where interceptors are registered (this may be dynamic, at runtime, or static, e.g. through configuration files) and context objects are provided, which allow access to the framework's internal state. (source: Wikipedia)

An aim of an interceptor module is to add a capability of monitoring compliant devices transparently and seamlessly integrate with operators (for example Telecoms) infrastructure. The compliant devices may be gateways, modems, set top boxes, TV sets or the like.

It would be advantageous to provide an interceptor module for monitoring and diagnostics of compliant devices

A publication of US7966407B2, entitled "Network device and interceptor module system and method for controlling remote communications" discloses an environment in an electronic device defining a plurality of parameters communicated between the electronic device and a remote computer as part of a remote session (i.e. the electronic device remotely controlling the remote computer via the remote session), with each parameter defining an action associated with the remote session. A first application, via a unidirectional communication with the environment, modifies at least one parameter associated with the environment (e.g. modifying keyboard scan codes, cursor position, mouse position, clipboard data, screen resolution, or channel administration). A network device (e.g. a router, a switch, a hub, a repeater, a multilayer switch, etc.) monitors communication between the electronic device and the remote computer and extracts the modified parameter and, based on a look-up, executes a pre-defined action affecting the remote session, wherein the pre-defined action is different than the modified parameter's associated action.

This publication presents a generic interceptor module relating to user input commands and their identification.

The aim of the development of the present invention is an improved system and method for monitoring an electronic device.

### SUMMARY AND OBJECTS OF THE PRESENT INVENTION

An object of the present invention is a method for monitoring an electronic device using an interceptor module operating as a bridge between a server and a client device the method further comprising the steps of: receiving a request for a connection from the server, which is followed by establishing such connection between the client device and the server; receiving from the server a request for parameters from the from the server; obtaining by the interceptor module obtains the parameters requested by the server and providing a suitable response to the server; storing by the interceptor module the parameters requested by the server in a database module; ending said connection, based on a request received from the server or the client.

Preferably, said parameters are specific variables selected from a group comprising: last boot time, parameters requiring running a multi-step process in order to obtain such parameter, operating time, status.

Preferably, said multi-step process is managed by a session tracker of the interceptor module configured to obtain and analyze parameters over a given session active withing a given time window.

Preferably, said server is an Auto Configuration Server.

Preferably, the interceptor module may act independently of the server, which is invisible from the perspective of the client, wherein a request for parameters is initiated by the interceptor module regardless of presence of such request from the server.

Preferably, the request for parameters is a request for periodic notifications.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein are accomplished by providing a system and method for monitoring an electronic device. Further details and features of the present invention, its nature and various advantages will become more apparent from the following detailed description of the preferred embodiments shown in a drawing, in which:
Fig. 1 presents a general diagram of an interceptor module;
Fig. 2 presents a diagram of the system according to the present invention;
Fig. 3 presents a diagram of the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

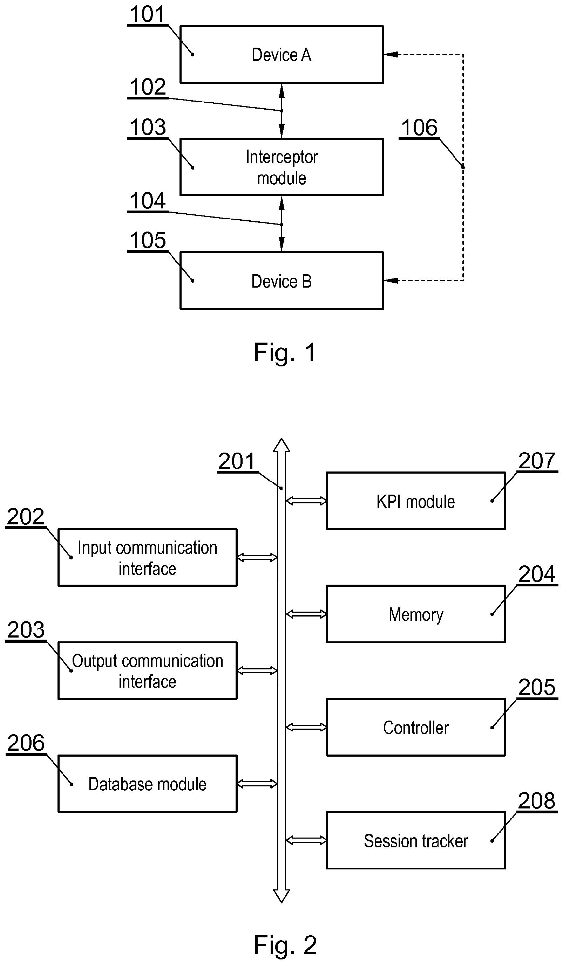

Fig. 1 presents a general diagram of an interceptor module. A Device A 101 is designed to communicate with a Device B 105 over a communication link 106. In such a system an interceptor module 103 is implemented, which shall intercept some or all of data messages transmitted between the A and B devices. In case some messages need to be intercepted, the 106 communication link may remain active for such purpose. For the purpose of interception, the A device communicates with the interceptor module 103 over a communication link 102 and the interceptor module communicates with the B device 105 over a communication link 104.

The interceptor module may be implemented as software or hardware or a combination of software/hardware.

Regarding the communication protocols used, the interceptor module 103 may be TR-069 model agnostic, which means that is compliant with both TR-098 and TR-181 data models.

In particular example, the interceptor module 103 according to the present invention may be used to add monitoring and diagnostics features to legacy ACS (Auto Configuration Server) systems devoid of such functions. This allows a broadcaster/operator to keep the ACS server side while investing in new CPE (Customer Premises Equipment) devices, already equipped with such interceptor module 103.

Fig. 2 presents a block diagram of the system according to the present invention. The system may be realized/implemented using dedicated components or custom made FPGA (Field-Programmable Gate Array) or ASIC (Application-Specific Integrated Circuit) circuits. The system comprises a data bus 201 communicatively coupled to a memory 204. Additionally, other components of the system are communicatively coupled to the system bus 201 so that they may be managed by a controller 205.

The memory 204 may store computer program or programs executed by the controller 205 in order to execute steps of the method according to the present invention.

The interceptor module 103 comprises an Input communication interface 202 allowing communication via the communication link 102 with the device A 101. Similarly, the interceptor module 103 comprises an output communication interface 203 allowing communication via the communication link 104 with the device B 105.

The communication links may be http supporting links at selected communication ports.

A KPI (Key Performance Index) module 207 may be present in order to calculate performance values of client device 101 such as download speed, upload speed, round trip delay for communication, packet loss. PING time, number of dropped connections, load factor, error rate, reboot count, frequency of change of certain parameters of a device 101 and similar indexes.

In some cases, such as download speed, upload speed indicators, it may be necessary to invoke a series of steps called a session between devices A, B (101, 105). Thus instead of capturing a state of a single variable, the session mechanism allows to capture a series of variable in a given time-frame and infer a conclusion based on the complete session. To this end, a session tracker module 208 may be present, which is responsible for initiating, maintaining, and ending such sessions.

Once, the KPI data or data of monitored variables of the device A 101 are established, they may be stored in a local or remote database 206.

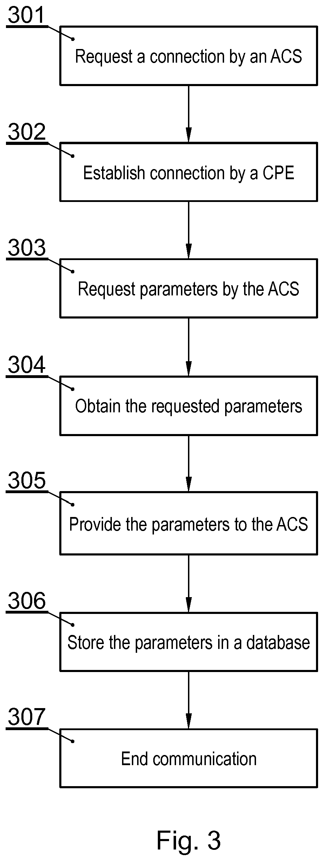

Fig. 3 presents a diagram of the method according to the present invention, which is managed by an interceptor module 103. The method starts at step 301 from receiving of a request for a connection from an ACS, which is naturally followed by establishing (302) such connection between the CPE and the ACS.

In general, requests from an ACS 105 are passed to the CPE 101 and vice versa without modifications. In more complex scenarios it may be the case that a request received from an ACS will require executing a special, multi-step process between the interceptor 103 and the CPE 101 (session's mechanism).

At step 303 the CPE may receive a request for parameters from the ACS. Such parameters may be specific variables e.g. last boot time or parameters requiring running a special, multi-step process in order to obtain such parameter e.g. speed test. Such special, multi-step process is typically managed by said session tracker 208 of the interceptor module.

At step 304 the interceptor module 103 obtains the parameters requested by the ACS and provides a suitable response to the ACS at step 305. Further, the interceptor module 103 stores 306 the parameters requested by the ACS in the database module 206, which may be local or remote to the interceptor module 103. Lastly, the communication with the ACS may be ended 307 based on a request received from the ACS or the CPE.

In general, there may be numerous reasons for sending notifications from a CPE, for example periodic notifications may report device state of particular module state, active notifications may report data in response to requests provided by an ACS (e.g. speed test), important events (such as boot, transfer complete) may be reported to an ACS as well as other notification may be present as described in detail in CWMP (CPE Wide Area Network Management Protocol) specification.

As an optional feature, the interceptor module 103 may act independently of an ACS 105, which is invisible from the perspective of a CPE 101. For example the periodic notifications may be initiated by the interceptor module 103 or a machine other than the ACS 105.

Thus, the system allows for monitoring different features and parameters irrespective of a kind of ACS 105 installed in a particular ecosystem of an operator.

As already explained, the present invention may be used to add monitoring and diagnostics features to legacy ACS systems devoid of such functions. This allows a broadcaster/operator to keep the ACS server side while investing in new CPE devices, already equipped with such interceptor module 103. Further, the interceptor module 103 is capable of executing KPI monitoring, which also includes the aforementioned sessions mechanism. Therefore, the invention provides a useful, concrete and tangible result.

The present invention intercepts, stores and processes computer data in order to provide reporting on CPE devices as well as infer KPI values from operating conditions of CPE devices. Thus, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for monitoring an electronic device may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for monitoring an electronic device using an interceptor module (103) operating as a bridge between a server (105) and a client device (101) the method being **characterized in that** it further comprises the steps of:
• receiving (301) a request for a connection from the server (105), which is followed by establishing (302) such connection between the client device (101) and the server (105);
• receiving (303) from the server (105) a request for parameters from the from the server (105);
• obtaining (304) by the interceptor module (103) obtains the parameters requested by the server (105) and providing (305) a suitable response to the server (105);
• storing (306) by the interceptor module (103) the parameters requested by the server (105) in a database module (206);
• ending (307) said connection, based on a request received from the server (105) or the client (101).

2. The method according to claim 1 wherein said parameters are specific variables selected from a group comprising: last boot time, parameters requiring running a multi-step process in order to obtain such parameter, operating time, status.

3. The method according to claim 2 wherein said multi-step process is managed by a session tracker (208) of the interceptor module (103) configured to obtain and analyze parameters over a given session active withing a given time window.

4. The method according to claim 1 wherein said server (105) is an Auto Configuration Server.

5. The method according to claim 1 wherein the interceptor module (103) may act independently of the server (105), which is invisible from the perspective of the client (101), wherein a request for parameters is initiated by the interceptor module (103) regardless of presence of such request from the server (105).

6. The method according to claim 1 wherein the request for parameters is a request for periodic notifications.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A system for monitoring an electronic device using an interceptor module (103) operating as a bridge between a server (105) and a client device (101) the system being **characterized in that** it comprises:
• the interceptor module (103) operating according to the step of the method of claim 1.
